# EUROPÄISCHE PATENTSCHRIFT

(11) **EP 3 341 264 B1**
(45) Veröffentlichungstag und Bekanntmachung des Hinweises auf die Patenterteilung: **22.05.2019**
(21) Anmeldenummer: 16757840.0
(22) Anmeldetag: 17.08.2016
(51) Int. Cl.: B62D 1/184

(54) **KLEMMVORRICHTUNG EINER VERSTELLBAREN LENKSÄULE FÜR KRAFTFAHRZEUGE**
CLAMPING DEVICE OF AN ADJUSTABLE STEERING COLUMN FOR MOTOR VEHICLES
DISPOSITIF DE BLOCAGE D'UNE COLONNE DE DIRECTION RÉGLABLE DE VÉHICULES AUTOMOBILES

(30) Priorität: 26.08.2015 DE 102015216348
(43) Veröffentlichungstag der Anmeldung: 04.07.2018
(73) Patentinhaber: ThyssenKrupp Presta AG, 9492 Eschen (LI); thyssenkrupp AG, 45143 Essen (DE)
(72) Erfinder: SCHNITZER, Hieronymus, 9487 Gamprin (LI); PALTINISANU, Ciprian, 9492 Eschen (LI)
(74) Vertreter: thyssenkrupp Intellectual Property GmbH
(86) Internationale Anmeldenummer: PCT/EP2016/069507
(87) Internationale Veröffentlichungsnummer: WO 2017/032662

(56) Entgegenhaltungen:
- EP-A1- 0 606 085
- EP-A1- 1 681 223
- EP-A1- 1 894 812
- KR-A- 20140 065 884

## Beschreibung

Die Erfindung betrifft eine Klemmvorrichtung einer verstellbaren Lenksäule für Kraftfahrzeuge, bei der ein mit dem Fahrzeugchassis fest verbundener Träger mit zwei ein Mantelrohr der Lenksäule umfassenden Klemmbacken verbunden ist, zwischen denen das eine Lenkspindel aufnehmende Mantelrohr der Lenksäule festklemmbar ist, mit einem die beiden Klemmbacken verbindenden Klemmbolzen, der an seinem einen Endabschnitt mit einem Betätigungshebel verbunden ist, welcher um die Bolzenachse drehbar ist, und mit einer an mindestens einem Klemmbacken angeordneten Zuspannvorrichtung derart zusammenwirkt, dass bei einer Drehung des Betätigungshebels in Zuspannrichtung um die Bolzenachse die beiden Klemmbacken das Mantelrohr fest einklemmen und dass bei einer Drehung des Betätigungshebels entgegen der Zuspannrichtung die Klemmbacken das Mantelrohr für die Lenksäulenverstellung freigegeben, wobei der Endabschnitt des Klemmbolzens als tellerförmiger Bolzenkopf ausgestaltet ist, dass der Betätigungshebel an seinem mit dem Klemmbolzen verbundenen Endbereich eine gestufte Durchgangsöffnung mit einem zum Durchgang des Klemmbolzens bestimmten, der Lenksäule zugewandten Innenabschnitt mit kleinem Durchmesser und einem zur Aufnahme des tellerförmigen Bolzenkopfs bestimmten, der Lenksäule abgewandten Außenabschnitt mit großem Durchmesser aufweist.

Die Erfindung befasst sich daher mit einer Klemmvorrichtung, welche durch Betätigung des Klemmhebels zwischen einer geöffneten und einer geschlossenen Position wechselt. In der geöffneten Position bewegt sich ein Klemmbolzen entlang der Langlöcher einer Konsole, um dadurch eine Längs- beziehungsweise Höhenverstellung der Lenksäule zu ermöglichen. In der geschlossenen Position wird der Klemmbolzen vorgespannt und die Lenksäule dadurch gehalten.

Die DE 10 2010 000 504 B3 offenbart eine Klemmvorrichtung, bei der der Klemmbolzen mit dem Betätigungshebel verbunden wird, indem der Klemmbolzen eine Verzahnung aufweist, auf die der Betätigungshebel aus Kunststoff in einem Fügebereich aufgepresst wird, sodass die Verzahnungsabschnitte in den Fügebereich eingegraben werden.

Ein Nachteil dieser Lösung ist, dass es zur Verbindung des Klemmbolzens mit dem Betätigungshebel eines Verzahnungsabschnitts bedarf, welcher bei der Fertigung Bauraum benötigt, wenn der Klemmbolzen hinter dem Betätigungshebel übersteht.

Die DE 10 2010 000 504 B3 offenbart des Weiteren in Figur 11 eine Klemmvorrichtung, bei der der Klemmbolzen mit dem Betätigungshebel verbunden wird, indem zur Sicherung des Betätigungshebels gegen ein axiales Abziehen vom Klemmbolzen eine Sicherungsmutter auf ein Gewinde des Klemmbolzens aufgeschraubt wird. Die Sicherungsmutter ist in dem Betätigungshebel derart angeordnet, dass der Betätigungshebel eine Vertiefung hat, in die die Sicherungsmutter versenkt wird.

Ein Nachteil dieser Lösung ist, dass bei der Fertigung der Vertiefung im Betätigungshebel im Übergangsbereich große Umformradien entstehen, wodurch die Anordnung eines Klemmmechanismus direkt am Betätigungshebel nicht möglich ist. Weiterhin ist von Nachteil, dass der für die Verbindung des Klemmbolzen mit dem Betätigungshebel erforderliche Verzahnungsabschnitt bei der Fertigung einen zusätzlichen Arbeitsschritt erfordert und zusätzliche Kosten verursacht.

Aus der KR 2014 0065884 A, offenbarend den Oberbegriff des unabhängigen Anspruchs, ist eine Klemmvorrichtung der eingangs genannten Art bekannt. Der Betätigungshebel ist als komplexes und in der Fertigung aufwendiges Formteil ausgebildet.

Aufgabe der Erfindung ist es, eine verbesserte Klemmvorrichtung mit einem Betätigungshebel zu schaffen, der einen geringen Bauraum benötigt, kostengünstig hergestellt werden kann, große Umformradien vermeidet, sowie einfach ausgebildet und montierbar ist.

Die Erfindung sieht vor, dass der Betätigungshebel ein Blechformteil ist, bei dem die gestufte Durchgangsöffnung nach dem Ausstanzen des Innenabschnitts durch Halbschnittprägung des Außenabschnitts ausgeformt ist. Die Halbschnittprägung ermöglicht die Beschränkung der Verformung auf einen möglichst geringen Radius um die Durchgangsöffnung herum. Dies ist insbesondere von Vorteil, wenn Bauteile der Zuspanneinrichtung in direkter Nachbarschaft zur Durchgangsöffnung angeordnet werden sollen.

In einer vorteilhaften Ausgestaltung der Erfindung erreicht die Tiefe der Prägung zwischen 30 % und 50 % der Materialstärke des Betätigungshebels. Dadurch kann eine besonders kompakte Bauform der Klemmvorrichtung erreicht werden. Eine Ausführungsform kommt ohne Verzahnung des Klemmbolzens und ohne Sicherungsmutter aus. Der Klemmbolzen wird mit seinem anderen, dem tellerförmigen Bolzenkopf abgewandten Ende zuerst in die gestufte Durchgangsöffnung des Betätigungshebels eingeführt und zwar von der Außenseite her zuerst durch den Außenabschnitt und dann durch den Innenabschnitt hindurch, bis der Bolzenkopf ganz oder überwiegend vom Außenabschnitt der Durchgangsöffnung des Betätigungshebels aufgenommen ist. Dadurch gibt es auf der der Lenksäule abgewandten Außenseite des Betätigungshebels keinen oder nur einen vernachlässigbar kleinen Überstand des Klemmbolzens. Wahlweise können zwischen Bolzenkopf und Betätigungshebel zusätzliche Sicherungselemente angeordnet sein, die ein Verdrehen des Betätigungshebels gegenüber dem Bolzenkopf verhindern.

Der Bolzenkopf ist in einer vorteilhaften Ausführungsform flach und kreiszylindrisch ausgebildet. Der Abstand zwischen der dem Betätigungshebel zugewandten Seite und der dem Betätigungshebel abgewandten Seite des Bolzenkopfs ist schmal. Der Bolzenkopf weist im Bereich des Aussenabschnitts des Betätigungshebels einen grösseren Durchmesser auf als im Bereich des Innenabschnitts.

Weiterhin ist es denkbar und möglich, dass der Bolzenkopf rechteckige, sechseckige, ein Aussengewinde oder andere Geometrien annehmen kann und mit dem komplementären Aussenabschnitt der Durchgangsöffnung des Betätigungshebels über eine Press-, Schweiss-oder Lötverbindung einen Formschluss bildet.

Der Bolzenschaft ist kreiszylindrisch ausgebildet und wird mit dem Betätigungshebel im Bereich des Innenabschnitts mit diesem über eine Press-, Schweiss-oder Lötverbindung verbunden. In einer weiteren vorteilhaften Ausgestaltungsform der Erfindung kann ein Formschluss zwischen Klemmbolzen und Betätigungshebel über eine gegengleiche Kontur des Bolzenschafts, im Bereich des Innenabschnitts des Betätigungshebels, und dem Innenabschnitt des Betätigungshebels beider Bauteile erreicht werden. Die komplementäre Geometrie kann als Vierkant- oder Sechskantprofil ausgebildet sein oder ein Aussengewinde aufweisen, das mit dem Innengewinde des Hebels verbunden werden kann.

In einer ersten Ausführungsform der Erfindung ist vorgesehen, dass die Zuspannvorrichtung als Nocken-Klemmvorrichtung ausgestaltet ist, die auf dem Klemmbolzen zwischen der Außenseite eines Klemmbackens und dem Betätigungshebel angeordnet ist. Diese Anordnung der Zuspannvorrichtung ist bei der erfindungsgemäßen Klemmvorrichtung besonders einfach und kostengünstig zu verwirklichen.

In einer weiteren Ausführungsform der Erfindung ist vorgesehen, dass die Zuspannvorrichtung als Pin-Klemmvorrichtung ausgestaltet ist, die auf dem Klemmbolzen zwischen der Außenseite eines Klemmenbackens und dem Betätigungshebel angeordnet ist. Auch die Pin-Klemmvorrichtung ist bei der erfindungsgemäßen Klemmvorrichtung an dieser Stelle besonders vorteilhaft zu verwirklichen.

In Weiterbildung der genannten Ausführungsform wird empfohlen, dass der Betätigungshebel als Bauteil der Pin-Klemmvorrichtung ausgestaltet ist, indem er vorzugsweise zwei im radialen Abstand zur Durchgangsöffnung eingeformte Taschen zur Aufnahme der Enden von Kippstiften der Pin-Klemmvorrichtung aufweist. Damit wird der Endbereich des Betätigungshebel ein Bauteil der Pin-Klemmvorrichtung, sodass eine separate Anfertigung dieses Bauteils mit Vorteil entfällt.

Die letztgenannte Ausführungsform kann noch verbessert werden durch die Maßnahme, dass der Betätigungshebel einen im radialen Abstand zur Durchgangsöffnung angeordneten länglichen Durchbruch aufweist, der zusammen mit einem an der Lenksäule fest angebrachten und durch den Durchbruch ragenden Vorsprung zwei Anschläge für den Betätigungshebel in vollständig geöffneter Stellung und vollständig geschlossener Stellung der Pin-Klemmvorrichtung bildet. Auf diese Weise wird die Begrenzung des Drehbereichs des Betätigungshebels konstruktiv durch die Ausgestaltung des Betätigungshebels selbst gewährleistet.

Ausführungsbeispiele der Erfindung werden nachfolgend anhand der Zeichnungen näher erläutert. Die Figuren zeigen im Einzelnen:
- Figur 1:: eine Lenksäule mit erfindungsgemäßer Klemmvorrichtung in perspektivischer Darstellung;
- Figur 2:: eine vergrößerte Detailansicht der Klemmvorrichtung in einer bevorzugten Ausführungsform;
- Figur 3A:: eine vergrößerte Teilansicht eines erfindungsgemäßen Betätigungshebel von der Außenseite gesehen;
- Figur 3B:: der Betätigungshebel von Figur 3A von der Innenseite her gesehen;
- Figur 4:: eine geschnittene Darstellung gemäß Linie A-A aus Figur 1 in einer ersten Ausführungsform mit Nocken-Klemmvorrichtung;
- Figur 5:: einen Schnitt wie Figur 4 einer zweiten Ausführungsform mit Pin-Klemmvorrichtung.

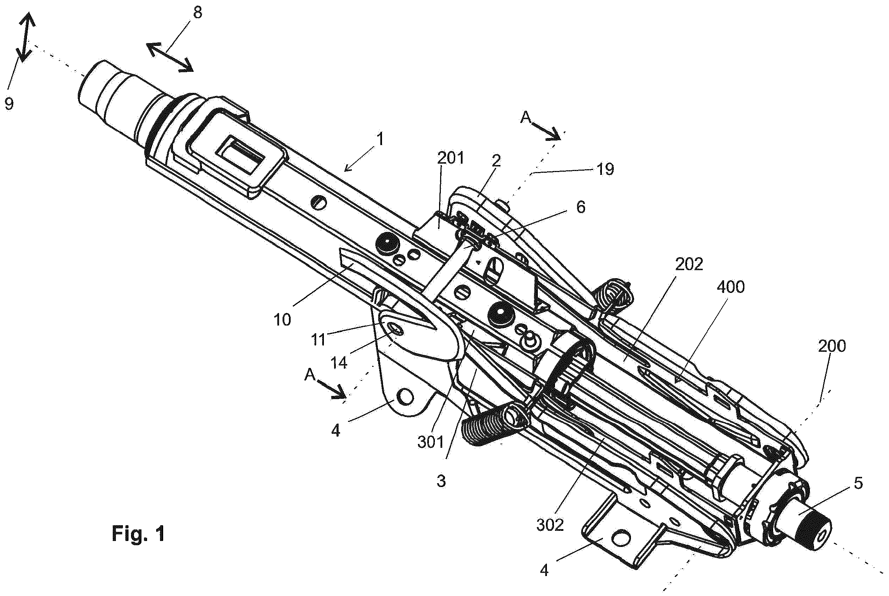

Wie man am besten in Figur 1 erkennt, wird die gezeigte Lenksäule am nicht gezeigten Fahrzeugchassis mittels eines Trägers 4 befestigt, welcher auch zwei Klemmbacken 2, 3 trägt, die mittels der erfindungsgemäßen Klemmvorrichtung zusammengeklemmt werden können. Festgeklemmt wird dabei ein Mantelrohr 1, welches eine mehrteilige, in Axialrichtung 8 teleskopisch auseinander und ineinander fahrbare Lenkspindel 5 drehbar lagert. Das Mantelrohr 1 selbst kann bei geöffneter Klemmvorrichtung ebenfalls in Axialrichtung 8 vor und zurück geschoben werden. Des Weiteren kann das Mantelrohr 1 bei geöffneter Klemmvorrichtung in Vertikalrichtung 9 nach oben und unten bewegt werden. Wenn das Mantelrohr 1 mittels der erfindungsgemäßen Klemmvorrichtung zwischen den Klemmbacken 2, 3 fest eingeklemmt ist, kann es weder in Axialerrichtung 8 noch in Vertikalrichtung 9 bewegt werden.

Die Klemmvorrichtung weist einen Klemmbolzen 6 auf, der mit einer Zuspannvorrichtung 7 zusammenwirkt, um die beiden Klemmbacken 2, 3 aufeinander zu zu bewegen, sodass diese das Mantelrohr 1 zwischen sich fest einklemmen.

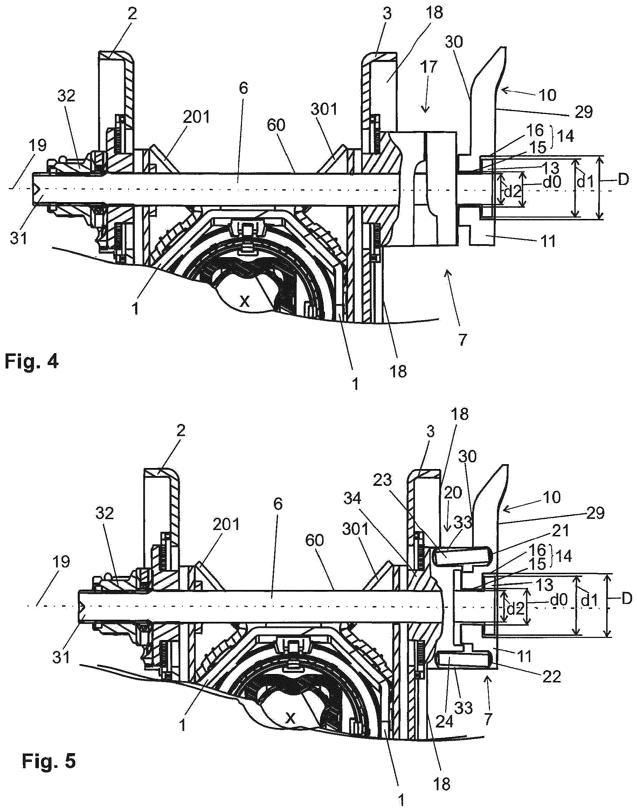

Wie man am besten in den Figuren 4 und 5 erkennt, verbindet der Klemmbolzen 6 die beiden Klemmbacken 2, 3 und ist an seinem einen Endabschnitt 13 mit einem Betätigungshebel 10 verbunden, der um die Bolzenachse 19 drehbar ist. Ein anderes Ende 31 des Klemmbolzens 6 ist an der Klemmbacke 2 mittels einer Mutter 32 verschraubt. Der Betätigungshebel 10 wirkt zusammen mit dem Klemmbolzen 6 auf eine Zuspannvorrichtung 7 derart ein, dass bei einer Drehung des Betätigungshebels 10 in Zuspannrichtung um die Bolzenachse 19 die beiden Klemmbacken 2, 3 das Mantelrohr 1 fest einklemmen und dass bei einer Drehung des Betätigungshebels 10 entgegen der Zuspannrichtung die Klemmbacken 2, 3 das Mantelrohr 1 für die Lenksäulenverstellung in Axialrichtung 8 und in Vertikalrichtung 9 freigeben.

Gemäss einer Ausführungsform, wie in Figur 1, 4 und 5 dargestellt, kann die Lenksäule weiterhin über einen Schwenkhebel 400 entlang einer Schwenkachse 200 in Axialrichtung 8 und in Vertikalrichtung 9 bewegt werden. Der Schwenkhebel 400 weist zwei einander gegenüberliegende Seitenwangen 202,302 auf, welche ihrerseits zwei einander gegenüberliegende Klemmbacken 201,301 aufweisen. In dem Schwenkhebel 400 ist das Mantelrohr 1 aufgenommen. Die Klemmbacken 201, 301 des Schwenkhebels 400 liegen zwischen den Klemmbacken 2, 3 des Trägers 4 und werden durch den Klemmbolzen 6 mit dem Träger 4 verbunden. Bei einer Drehung des Betätigungshebels 10 in Zuspannrichtung um die Bolzenachse 19 klemmen die Klemmbacken 2, 3 des Trägers zusammen mit den Klemmbacken 201, 301 des Schwenkhebels 400 das Mantelrohr 1 fest ein. Bei einer Drehung des Betätigungshebels 10 entgegen der Zuspannrichtung geben die Klemmbacken 2, 201, 3, 301 das Mantelrohr 1 für die Lenksäulenverstellung in Axialrichtung 8 und in Vertikalrichtung 9 frei.

Es ist denkbar und möglich, dass die Klemmvorrichtung bei einer Lenksäule 1 vorgesehen ist, die keinen Schwenkhebel 400 aufweist.

Die Verbindung zwischen dem Betätigungshebel 10 und dem Klemmbolzen 6 ist derart ausgestaltet, dass der Endabschnitt 13 des Klemmbolzens 6 als tellerförmiger Bolzenkopf 13 ausgestaltet ist, welcher einen Durchmesser d1 aufweist, und dass der Betätigungshebel 10 in seinem Endbereich 11 eine gestufte Durchgangsöffnung 14 aufweist, durch die der Klemmbolzen 6 hindurchragt. Die gestufte Durchgangsöffnung 14 besteht aus einem Innenabschnitt 15 mit geringerem Durchmesser d0 und einem Außenabschnitt 16 mit größerem Durchmesser D. Der Durchmesser d1 des Bolzenkopfs 13 ist kleiner als der Durchmesser D des Aussenabschnitts 16 des Betätigungshebels 10. Der Klemmbolzen 6 wird mit seinem schmalen Ende 31 zuerst durch die Durchgangsöffnung 14 gesteckt und zwar von der Außenseite 29 des Betätigungshebels 10 in Richtung der Innenseite 30 des Betätigungshebels 10. Somit wird der Bolzenkopf 13 im Außenabschnitt 16 der Durchgangsöffnung 14 des Betätigungshebels 10 vollständig aufgenommen, sodass er über die Außenseite 29 des Betätigungshebels 10 nicht oder nur unwesentlich hervor steht. Dies erkennt man ebenfalls gut in den Figuren 4 und 5.

Alternativ kann der Bolzenkopf mit einer Umfangskontur ausgebildet sein, die in den Durchmesser D des Aussenabschnitts 16 des Betätigungshebels 10 einbeschrieben werden kann.

Bei der in den Figuren 4 und 5 dargestellten Ausführungsform kann eine Verbindung zwischen Klemmbolzen 6 und Betätigungshebel 10 derart gebildet werden, dass der Durchmesser d2 des Bolzenschafts 60 im Bereich des Innenabschnitts 15 eine Umfangskontur aufweist, die in den Durchmesser d0 im Innenabschnitt 15 einbeschrieben werden kann.

Bei der in Figur 4 dargestellten einen Ausführungsform der Erfindung ist die Zuspannvorrichtung 7 als Nocken-Klemmvorrichtung 17 ausgestaltet, die auf dem Klemmbolzen 6 angeordnet ist, und zwar zwischen der Außenseite 18 des Klemmbackens 3 und dem Endbereich 11 des Betätigungshebels 10.

Eine noch kompaktere und raumsparendere Ausführungsform ist in Figur 5 dargestellt. Dort ist zwischen der Außenseite 18 des Klemmbackens 3 und dem Endbereich 11 des Betätigungshebels 10 eine Zuspannvorrichtung 7 angeordnet, die als Pin-Klemmvorrichtung 20 ausgestaltet ist. Dabei ist der Endbereich 11 des Betätigungshebels 10 selbst Bauteil der Pin-Klemmvorrichtung 20, denn in die Innenseite 30 des Betätigungshebel 10 sind zwei Taschen 21, 22 eingeformt, die zur Aufnahme von zwei Kippstiften 23, 24 der Pin-Klemmvorrichtung 20 dienen.

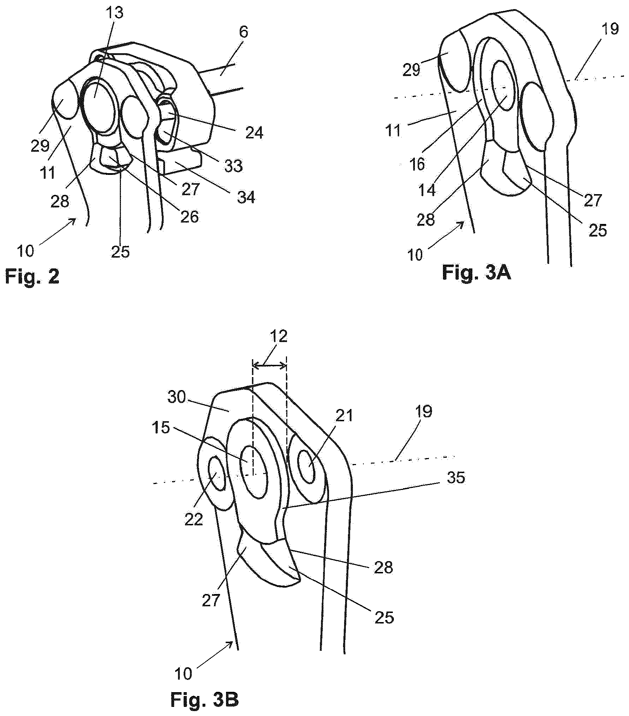

Die Funktion der Pin-Klemmvorrichtung 20 ist in den Figuren 2, 3A und 3B im Detail dargestellt. In Figur 2 erkennt man den Endbereich 11 des Betätigungshebels 10 und den Klemmbolzen 6, dessen Bolzenkopf 13 durch den Betätigungshebel 10 hindurchgesteckt ist. Des Weiteren ist ein Kippstift 24 sichtbar, der mit einem Ende in die hier nicht sichtbare Tasche 22 des Betätigungshebels 10 hineinragt und dessen anderes Ende von einer Ausnehmung 33 eines Klemmteils 34 der Pin-Klemmvorrichtung 20 aufgenommen ist. Entsprechend ist auch der nicht sichtbare Kippstift 23 in der nicht sichtbaren Tasche 21 des Betätigungshebels 10 und sein anderes Ende in einer weiteren, nicht sichtbaren Ausnehmung des Klemmteils 34 angeordnet. Die Figur 2 zeigt die Pin-Klemmvorrichtung 20 im zugespannten Zustand, bei der der Abstand zwischen dem Endbereich 11 und dem Klemmteil 34 maximal ist. Das Klemmteil 34 wirkt dabei auf den Klemmbacken 3 ein und drückt diesen gegen das Mantelrohr 1, während andererseits der Bolzenkopf 13 durch den Endbereich 11 des Betätigungshebels 10 nach außen gezogen wird, wodurch das andere Ende 31 des Klemmbolzens 6 über die Mutter 32 auf den Klemmbacken 2 einwirkt und diesen von der anderen Seite gegen das Mantelrohr 1 drückt. (Siehe Figur 5)

Die Pin-Klemmvorrichtung 20 kann geöffnet werden, indem der Betätigungshebel 10 in Öffnungsrichtung, in Figur 2 wäre das im Uhrzeigersinn gedreht wird. Dabei werden die Kippstifte 23, 24 in ihren Ausnehmungen 33 gekippt, sodass ihre wirksame Länge in Richtung der Bolzenachse 19 verkürzt wird. Dadurch kann sich der Endbereich 11 des Betätigungshebels 10 auf das Klemmteil 34 zu bewegen, wobei auch der Klemmbolzen 6 eine Verschiebung in Richtung des gegenüberliegenden Klemmbackens 2 erfährt. Dies wiederum erlaubt den beiden Klemmbacken 2, 3 in entgegengesetzte Richtungen auseinander zu rücken und das Mantelrohr 1 aus dem Klemmgriff zu befreien.

In den Figuren 3A und 3B erkennt man die Ausformung des Endbereichs 11 des Betätigungshebels 10 im Detail, insbesondere die Durchgangsöffnung 14 mit ihrem engeren Innenabschnitt 15 und dem weiteren Außenabschnitt 16, der zur Aufnahme des Bolzenkopfs 13 des Klemmbolzens 6 dient. Die Durchgangsöffnung 14 hat somit die Form einer Stufenbohrung. Sie wird aber nicht durch Bohren erzeugt, sondern durch Stanzen und Verformen des Blechteils, aus dem der Betätigungshebel 10 besteht. Dabei wird der Außenabschnitt 16 mittels Halbschnitt-Prägung (Half Cut-Prägung oder Semishear-Verfahren) im Blechmaterial ausgeformt. Dies geschieht auf der der Lenksäule abgewandten Außenseite 29 des Betätigunghebels 10. Auf der gegenüberliegenden Innenseite 30 des Betätigungshebels 10 muss das Blechmaterial, welches im Außenabschnitt 16 weggedrückt wurde, als Vorsprung 35 erscheinen.

Es ist nun ein besonderer Vorteil des genannten Halbschnitt-Verfahrens, dass die Ausdehnung des Vorsprungs 35 in radialer Richtung von der Bolzenachse 19 aus gesehen relativ gering gehalten werden kann. Dies bedeutet, dass ein Radius 12 der Verformung relativ klein ist. Dies wiederum ermöglicht die Anordnung anderer Funktionselemente des Pin-Klemmmechanismus 20, insbesondere der Taschen 21, 22, nahe und dennoch außerhalb des Abstands 12 von der Bolzenachse 19 anzuordnen. Dies erkennt man am besten in Figur 3B. Die Anordnung der Taschen 21, 22 nahe der Bolzenachse 19 wiederum ermöglicht die Anordnung der Kippstifte 23, 24 in demselben geringen Abstandsbereich, wodurch die für das Zuspannen des Pin-Klemmmechanismus 20 zur Verfügung stehenden Klemmkraft vergrößert und die manuell am Betätigungshebel 10 aufzubringende Betätigungskraft verringert werden kann. Kurz gesagt: bei nahe an der Bolzenachse 19 angeordneten Kippstiften 23, 24 hat man auf Seiten der Pin-Klemmvorrichtung 20 einen kleinen Hebelarm im Verhältnis zum großem Hebelarm des (nicht gezeigten) Griffbereichs des Bedienungshebels 10.

Die besten Ergebnisse mit der Halbschnitt-Prägung erhält man, wenn die Prägungstiefe zwischen 30 % und 50 % der Materialstärke des Betätigungshebels 10 liegt.

Wie man am besten in Figur 2 erkennt, ist der Betätigungshebel 10 zusätzlich mit einem Durchbruch 25 versehenen, der die Form eines länglichen, gebogenen Schlitzes aufweist. Der Durchbruch 25 ist im radialen Abstand zur Bolzenachse 19 bzw. zur Mitte der Durchgangsöffnung 14 angeordnet. Des Weiteren weist das Klemmteil 34 einen Vorsprung 26 auf, der ebenfalls im radialen Abstand zur Bolzenachse 19 angeordnet ist und in axialer Richtung in den Durchbruch 25 des Betätigungshebels 10 hineinragt. Der Vorsprung 26 begrenzt daher die Drehbewegung des Betätigungshebels 10, indem er an den seitlichen Wänden 27, 28 des Durchbruchs 25 anschlägt, so dass der Betätigungshebel 10 nicht weiter gedreht werden kann. Dadurch ist eine Öffnungsstellung und eine Schließstellung des Betätigungshebels 10 festgelegt. Die genannten seitlichen Wände des Durchbruchs 25 bilden daher zwei Anschläge 27, 28.

### BEZUGSZEICHENLISTE

- 1: Mantelrohr
- 2: Klemmbacken
- 3: Klemmbacken
- 4: Träger
- 5: Lenkspindel
- 6: Klemmbolzen
- 7: Zuspannvorrichtung
- 8: Axialrichtung
- 9: Vertikalrichtung
- 10: Betätigungshebel
- 11: Endbereich
- 12: Radius / Abstand
- 13: Endabschnitt / Bolzenkopf
- 14: Durchgangsöffnung
- 15: Innenabschnitt
- 16: Außenabschnitt
- 17: Nocken-Klemmvorrichtung
- 18: Außenseite
- 19: Bolzenachse
- 20: Pin-Klemmvorrichtung
- 21: Tasche
- 22: Tasche
- 23: Kippstift
- 24: Kippstift
- 25: Durchbruch
- 26: Vorsprung
- 27: Wand / Anschlag
- 28: Wand / Anschlag
- 29: Außenseite
- 30: Innenseite
- 31: anderes Ende
- 32: Mutter
- 33: Ausnehmung
- 34: Klemmteil
- 35: Vorsprung
- d0: Durchmesser
- d1: Durchmesser
- d2: Durchmesser
- D: Durchmesser
- 60: Bolzenschaft
- 201: Klemmbacke
- 301: Klemmbacke
- 202: Klemmwange
- 302: Klemmwange
- 200: Schwenkachse
- 400: Schwenkhebel

## Patentansprüche

1. Klemmvorrichtung einer verstellbaren Lenksäule für Kraftfahrzeuge, bei der ein mit dem Fahrzeugchassis fest verbundener Träger (4) mit zwei ein Mantelrohr (1) der Lenksäule umfassenden Klemmbacken (2, 3) verbunden ist, zwischen denen das eine Lenkspindel (5) aufnehmende Mantelrohr (1) der Lenksäule festklemmbar ist, mit einem die beiden Klemmbacken (2, 3) verbindenden Klemmbolzen (6), der an seinem einen Endabschnitt (13) mit einem Befestigungshebel (10) verbunden ist, welcher um die Bolzenachse (19) drehbar ist und mit einer an mindestens einem Klemmbacken (2, 3) angeordneten Zuspannvorrichtung (7) derart zusammenwirkt, dass bei einer Drehung des Betätigungshebels (10) in Zuspannrichtung um die Bolzenachse (19) die beiden Klemmbacken (2, 3) das Mantelrohr (1) fest einklemmen und dass bei einer Drehung des Betätigungshebels (10) entgegen der Zuspannrichtung die Klemmbacken (2, 3) das Mantelrohr (1) für die Lenksäulenverstellung freigeben, wobei der Endabschnitt (13) des Klemmbolzens (6) als tellerförmiger Bolzenkopf (13) ausgestaltet ist, dass der Betätigungshebel (10) an seinem mit dem Klemmbolzen (6) verbundenen Endbereich (11) eine gestufte Durchgangsöffnung (14) mit einem zum Durchgang des Klemmbolzens (6) bestimmten, der Lenksäule zugewandten Innenabschnitt (15) mit kleinem Durchmesser (d) und einem zur Aufnahme des tellerförmigen Bolzenkopfs (13) bestimmten, der Lenksäule abgewandten Außenabschnitt (16) mit großem Durchmesser (D) aufweist, **dadurch gekennzeichnet, dass** der Betätigungshebel (10) ein Blechformteil ist, bei dem die gestufte Durchgangsöffnung (14) nach dem Ausstanzen des Innenabschnitts (15) durch Halbschnitt-Prägung des Außenabschnitts (16) ausgeformt ist.

2. Klemmvorrichtung nach Anspruch 1, **dadurch gekennzeichnet, dass** die Tiefe der Prägung zwischen 30 % und 50 % der Materialstärke des Betätigungshebels (10) erreicht.

3. Klemmvorrichtung nach einem der Ansprüche 1 bis 2, **dadurch gekennzeichnet, dass** die Zuspannvorrichtung (7) als Nocken-Klemmvorrichtung (17) ausgestaltet ist, die auf dem Klemmbolzen (6) zwischen der Außenseite (18) des Klemmbackens (3) und dem Betätigungshebel (10) angeordnet ist.

4. Klemmvorrichtung nach einem der Ansprüche 1 bis 2, **dadurch gekennzeichnet, dass** die Zuspannvorrichtung (7) als Pin-Klemmvorrichtung (20) ausgestaltet ist, die auf dem Klemmbolzen (6) zwischen der Außenseite (18) des Klemmbackens (3) und dem Betätigungshebel (10) angeordnet ist.

5. Klemmvorrichtung nach Anspruch 4, **dadurch gekennzeichnet, dass** der Betätigungshebel (10) als Bauteil der Pin-Klemmvorrichtung (20) ausgestaltet ist, indem er vorzugsweise zwei im radialen Abstand zur Durchgangsöffnung (14) eingeformte Taschen (21, 22) zur Aufnahme der Enden von Kippstiften (23, 24) der Pin-Klemmvorrichtung (20) aufweist.

6. Klemmvorrichtung nach Anspruch 4 oder 5, **dadurch gekennzeichnet, dass** der Betätigungshebel (10) einen im radialen Abstand zur Durchgangsöffnung (14) angeordneten, länglichen Durchbruch in (25) aufweist, der zusammen mit einem an der Lenksäule fest angebrachten und durch den Durchbruch (25) ragenden Vorsprung (26) zwei Anschläge in (27, 28) für den Betätigungshebel (10) in vollständig geöffneter Stellung und vollständig geschlossener Stellung der Pin-Klemmvorrichtung (20) bildet.

## Claims

1. Clamping device of an adjustable steering column for motor vehicles, where a bracket (4), which is fixedly connected to the vehicle chassis, is connected to two clamping jaws (2, 3), which surround an outer casing (1) of the steering column and between which the outer casing (1) of the steering column, which receives a steering spindle (5), is clampable, having a clamp bolt (6) which connects the two clamping jaws (2, 3) and which is connected at its one end portion (13) to a acuating lever (10), which is rotatable about the bolt axis (19) and interacts with a closing device (7), which is arranged on at least one clamping jaw (2, 3), in such a manner that when the actuating lever (10) is rotated in the closing direction about the bolt axis (19), the two clamping jaws (2, 3) clamp the outer casing (1) securely and that when the actuating lever (10) is rotated counter to the closing direction, the clamping jaws (2, 3) release the outer casing (1) for the adjustment of the steering column, wherein the end portion (13) of the clamp bolt (6) is configured as a disk-shaped bolt head (13), in that the actuating lever (10) comprises, on its end region (11) connected to the clamp bolt (6), a stepped through-opening (14) with an inner portion (15), which is intended for the passage of the clamp bolt (6), faces the steering column and has a small diameter (d), and an outer portion (16) which is intended for receiving the disk-shaped bolt head (13), is remote from the steering column and has a large diameter (D), **characterized in that** the actuating lever (10) is a sheet metal part where the stepped through-opening (14) is formed after the punching of the inner portion (15) as a result of half cut embossing of the outer portion (16).

2. Clamping device according to Claim 1, **characterized in that** the depth of the embossing reaches between 30 % and 50 % of the thickness of the material of the actuating lever (10).

3. Clamping device according to one of Claims 1 to 2, **characterized in that** the closing device (7) is configured as a cam clamping device (17) which is arranged on the clamp bolt (6) between the outside (18) of the clamping jaw (3) and the actuating lever (10).

4. Clamping device according to one of Claims 1 to 2, **characterized in that** the closing device (7) is configured as a pin clamping device (20) which is arranged on the clamp bolt (6) between the outside (18) of the clamping jaw (3) and the actuating lever (10).

5. Clamping device according to Claim 4, **characterized in that** the actuating lever (10) is configured as a component of the pin clamping device (20) by comprising preferably two pockets (21, 22), which are formed at a radial distance from the through-opening (14), for receiving the ends of tilt pins (23, 24) of the pin clamping device (20).

6. Clamping device according to Claim 4 or 5, **characterized in that** the actuating lever (10) comprises an elongated breakthrough (25), which is arranged at a radial distance from the through-opening (14) and together with a projection (26), which is fixedly attached to the steering column and protrudes through the breakthrough (25), forms two stops (27, 28) for the actuating lever (10) in the totally open position and totally closed position of the pin clamping device (20).

## Revendications

1. Dispositif de blocage d'une colonne de direction réglable pour des véhicules automobiles, dans lequel un support (4) assemblé de façon fixe au châssis de véhicule est relié à deux mâchoires de blocage (2, 3) encadrant un tube d'enveloppe (1) de la colonne de direction, entre lesquelles le tube d'enveloppe (1) de la colonne de direction contenant un axe de direction (5) peut être bloqué, avec un boulon de blocage (6) reliant les deux mâchoires de blocage (2, 3), qui est relié par sa première partie d'extrémité (13) à un levier d'actionnement (10), qui peut tourner autour de l'axe de boulon (19) et qui coopère avec un dispositif de serrage (7) disposé sur au moins une mâchoire de blocage (2, 3), de telle manière que, lors d'une rotation du levier d'actionnement (10) dans le sens du serrage autour de l'axe de boulon (19) les deux mâchoires de blocage (2, 3) enserrent fixement le tube d'enveloppe (1) et que lors d'une rotation du levier d'actionnement (10) à l'inverse du sens de serrage les mâchoires de blocage (2, 3) libèrent le tube d'enveloppe (1), dans lequel la partie d'extrémité (13) du boulon de blocage (6) est formée par une tête de boulon en forme de plateau (13), que le levier d'actionnement (10) présente à sa région d'extrémité (11) reliée au boulon de blocage (6) une ouverture de passage étagée (14) avec une partie intérieure (15) de petit diamètre (d) destinée au passage du boulon de blocage (6) et tournée vers la colonne de direction et avec une partie extérieure (16) de grand diamètre (D) destinée à recevoir la tête de boulon en forme de plateau (13) et détournée de la colonne de direction, **caractérisé en ce que** le levier d'actionnement (10) est une pièce formée en tôle, dans laquelle l'ouverture de passage étagée (14) est formée après le découpage de la partie intérieure (15) par estampage en demi-coupe de la partie extérieure (16).

2. Dispositif de blocage selon la revendication 1, **caractérisé en ce que** la profondeur de l'estampage atteint entre 30 % et 50 % de l'épaisseur de matière du levier d'actionnement (10).

3. Dispositif de blocage selon une des revendications 1 à 2, **caractérisé en ce que** le dispositif de serrage (7) est formé par un dispositif de blocage à came (17), qui est disposé sur le boulon de blocage (6) entre le côté extérieur (18) de la mâchoire de blocage (3) et le levier d'actionnement (10).

4. Dispositif de blocage selon une des revendications 1 à 2, **caractérisé en ce que** le dispositif de serrage (7) est formé par un dispositif de blocage à broches (20), qui est disposé sur le boulon de blocage (6) entre le côté extérieur (18) de la mâchoire de blocage (3) et le levier d'actionnement (10).

5. Dispositif de blocage selon la revendication 4, **caractérisé en ce que** le levier d'actionnement (10) est formé comme composant du dispositif de blocage à broches (20), par le fait qu'il présente de préférence deux poches (21, 22) formées à distance radiale de l'ouverture de passage (14) pour recevoir les extrémités de goupilles basculantes (23, 24) du dispositif de blocage à broches (20).

6. Dispositif de blocage selon une revendication 4 ou 5, **caractérisé en ce que** le levier d'actionnement (10) présente une découpe allongée (25), disposée à distance radiale de l'ouverture de passage (14), qui forme avec une saillie (26) agencée de façon fixe sur la colonne de direction et traversant la découpe (25) deux butées (27, 28) pour le levier d'actionnement (10) en position complètement ouverte et en position complètement fermée du dispositif de blocage à broches (20).
